# EUROPEAN PATENT SPECIFICATION

(11) **EP 1 987 305 B1**
(45) Date of publication and mention of the grant of the patent: **09.04.2014**
(21) Application number: 07704808.0
(22) Date of filing: 13.02.2007
(51) Int. Cl.: F28C 1/06, F28C 1/04, F28C 3/06, F28C 1/00, F28F 25/00, F28F 25/10

(54) **COOLING EQUIPMENT**
KÜHLUNGANLAGE
DISPOSITIF DE REFROIDISSEMENT D'UNE SOLUTION

(30) Priority: 23.02.2006 FI 20060176
(43) Date of publication of application: 05.11.2008
(73) Proprietor: Outotec Oyj, 02230 Espoo (FI)
(72) Inventor: VAARNO, Jussi, FI-02430 Masala (FI); HYÖDYNMAA, Tapio, FI-02400 Kirkkonummi (FI); TUUPPA, Eero, FI-02230 ESPOO Espoo (FI); LEHTONEN, Markus, FI-01830 Lepsämä (FI)
(74) Representative: K & H Bonapat
(86) International application number: PCT/FI2007/000034
(87) International publication number: WO 2007/096457

(56) References cited:
- JP-A- 60 069 488
- US-A- 1 739 867
- US-A- 2 016 086
- US-A- 4 722 745
- US-A- 5 512 072

## Description

The present invention relates to a cooling equipment, defined in the independent claim.

When separating zinc from an electrolytic solution containing zinc ions and sulfuric acid, the temperature of the electrolyte generally rises. Typically, for cooling solutions such as electrolyte, or an acidic solution containing slurries or metals, there are used cooling towers where the cooling process is based on the evaporation of liquid drops in the upwardly flowing air from the liquid drops to be cooled. Generally the air flow is colder than the liquid flow, in which case the downwardly flowing liquid is cooled owing to heat transfer. Consequently, convection takes place in the cooling process, and droplets moving against the air flow are evaporated. Heat is emitted, as the liquid is cooled in the cooling tower. In cross-section, cooling towers are typically either hexagonal or quadrangular cylinders. The solution to be cooled is conducted to the tower in a known fashion through the top part thereof, and the cooling air is fed in through the side of the cooling tower. During the cooling process, droplets containing particle material are separated from the solution. Said droplets are separated from the gas contained by the harmful particle material in separate droplet separator devices prior to letting the gas out. The separated liquid is conducted back to the cooling tower. During the cooling process, the impurities are accumulated on the tower walls and floor as well as to the droplet separator elements, which creates a need to frequent maintenance procedures.

When feeding the cooling air to the cooling tower horizontally at one spot provided in the tower wall, problems arise mainly owing to an uneven distribution of the gas. When the gas is conducted horizontally to the tower, it must turn 90 degrees in order to move in the vertical direction in the cooling tower. Both this fact and the large size of the air-feeding fan with respect to the dimensions of the tower can result in an uneven distribution of the gas in the cooling space of the cooling tower. In addition, another problem has been how to ensure an efficient recovery of the droplets. Conventionally, separated droplets are collected by separator devices that are arranged horizontally against the flow. In said devices, the droplets are gathered on the surface of strip-like structures, and the liquid circulated by gravity is directed against the gas flow back to the cooling tower. The higher the gas velocity, the more effectively the droplets are separated. However, a drawback with horizontally arranged devices for collecting and separating droplets is that the gas velocity must be restricted, which reduces the efficiency of the cooling tower. In the planning of cooling towers, attention must be paid to the emissions discharged therefrom, because cooling towers are often remarkable sources of emissions in a process, for example in zinc plants. Likewise, when evaluating the functionality of cooling towers, attention must be paid to the maintenance procedures of said towers. Often the towers require several maintenance operations within a short period of time, wherefore it is important that the maintenance is carried out rapidly and easily.

The efficiency of a cooling tower can be improved by enhancing an even distribution of the cooling air. Conventionally the cooling air distribution in the cooling tower has been attempted to be improved by placing an obstacle in front of the cooling air feed aperture in the vertical direction, in which case the direction of the air flow can be turned more upwardly.

The publication CA 2271424 A1 discloses a cooling tower for cooling liquid. In the arrangement according to said publication, there is described a multilayer wall arrangement for a cooling tower, where the wall consists of an outer wall and an air-permeable, flexible inner wall, in which case part of the air is injected through pores arranged in the inner wall to the cooling space, where it meets the liquid to be cooled. The object of this arrangement is to remove deposits accumulated on the inner wall. However, an optimal cooling solution is not achieved by this arrangement, owing to the pressure loss caused by the inner wall.

Further, document US 2,016,086 describes a cooling equipment for liquids including a vertical cooling tower into which cooling air is fed in, namely horizontally, while this air is let out then as exhaust air also in a horizontal manner. Preceeding this outlet, droplet eliminator plates are arranged.

The object of the present invention is to eliminate some of the drawbacks of the prior art and to realize a new way for cooling liquid. A particular object of the invention is to introduce a new cooling equipment and method, in which case the cooling efficiency is increased both by feeding cooling air to the cooling space and by conducting the outwardly flowing air out of the cooling tower both horizontally and tangentially with respect to the cooling tower. The essential novel features of the invention are apparent from the appended claims.

Remarkable advantages are connected to the invention. The invention relates to a cooling equipment for cooling liquid, comprising: a cooling tower that is mainly cylindrical in the vertical direction, said cooling tower including an outer surface, an upper part of the cooling tower and a bottom part, which together define the cooling space; cooling air feed equipment comprising at least one inlet aperture on the cooling tower outer surface; means for feeding cooling air to the inlet aperture and further to the cooling space of the cooling tower; liquid feed equipment comprising means, such as liquid nozzles, for feeding the liquid to be cooled to the cooling space, discharge equipment for the exhaust air, as well as means for removing the cooled liquid, in which case the cooling air feed equipment and the exhaust air discharge equipment are arranged, with respect to the cooling tower, so that both the flowing direction of the cooling air from the inlet aperture to the cooling space and the flowing direction of the exhaust air out of the discharge equipment is horizontal and parallel with a tangent of the outer surface of the cooling tower. By means of a cooling equipment according to the invention, an even distribution of cooling air is advantageously achieved in the cooling zone, and the cooling process is enhanced. By feeding cooling air to the cooling space horizontally, preferably in the vicinity of the bottom part of the cooling tower and in parallel with a tangent of the outer surface of the cooling tower, the component of the horizontal rotation speed of the air flow is simultaneously raised. Thus the delay time of the cooling air in the cooling space is increased, and consequently the cooling efficiency of the liquid droplets flowing in the tower is improved.

According to the invention, the exhaust air discharge equipment comprises a housing element including at least four, preferably eight, outlet apertures arranged vertically with respect to the horizontal cross-section of the cooling tower. The outlet apertures are distributed along the circumferential direction of the cooling tower and oriented in said same circumferential direction. According to an embodiment of the invention, the outlet apertures are placed equidistantly in the housing element, in which case each plane parallel to the surface of the outlet aperture forms an equally large angle with a tangent of the outer surface of the cooling tower. According to an embodiment of the invention, in each outlet aperture, there is vertically installed at least one droplet separator element for separating the liquid droplets from the exhaust air. According to an embodiment of the invention, the droplet separator element is formed of at least two adjacently positioned, air-permeable vertical plates with a corrugated profile. When air also is conducted out through the upper part of the cooling tower both horizontally and tangentially, it is possible to use vertically installed separator devices for separating air and the droplets contained therein, in which devices the return circulation of the liquid flows in perpendicular to the exhaust air flow, which increases the gas velocity and improves the cooling efficiency. Droplet separator devices that are arranged vertically with respect to the cooling tower are more effective than horizontally arranged separator devices. By using a cooling equipment according to the invention, the size of the cooling tower is remarkably reduced, while the cooling efficiency is, however, increased. This brings forth advantageous savings in the material expenses of the cooling tower. In addition, the cooling arrangement according to the invention makes the maintenance operations of the liquid feed equipment and exhaust air discharge equipment easier because of the practical positions thereof. According to an advantageous embodiment of the invention, the ratio of the height of the outlet aperture and the height of the cooling tower in the vertical direction is 1:5, in which case an optimal cooling efficiency is achieved.

The invention is described in more detail with reference to the appended drawings, where
Figure 1 illustrates a cooling equipment according to the invention
Figure 2 shows a cooling equipment according to the invention, seen in a cross-section of the embodiment illustrated in figure 1
Figure 3 illustrates a cooling equipment according to the invention

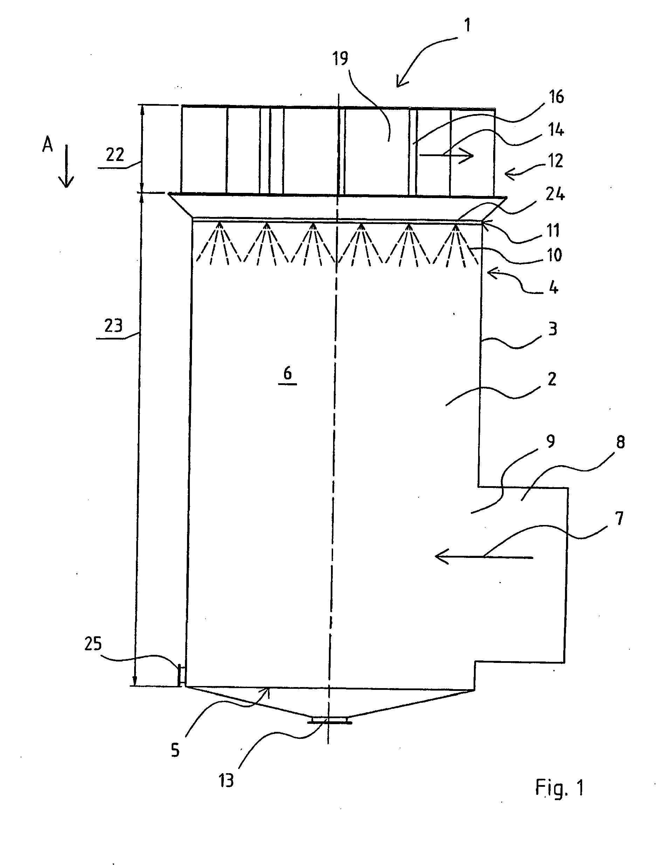

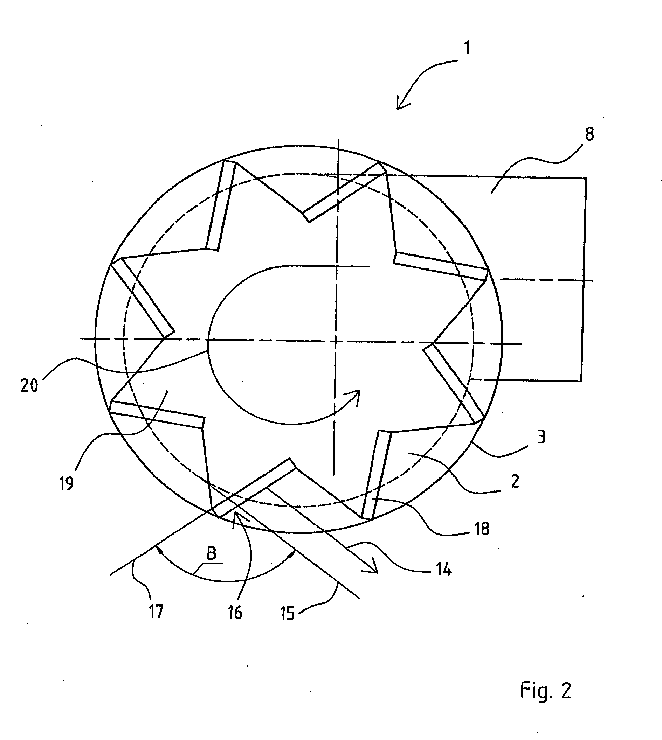

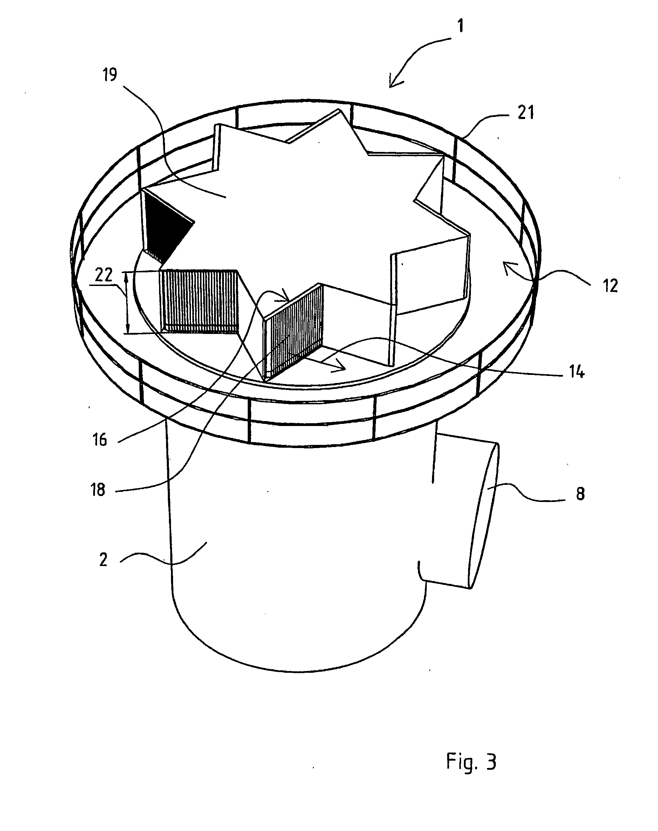

Figure 1 illustrates a cooling equipment 1 according to the invention for cooling liquid, such as electrolyte. Figure 2 shows a cross-section of the embodiment of figure 1, seen from the direction A. Figure 3 illustrates a cooling equipment according to the invention, seen as three-dimensional. The cooling equipment 1 comprises a cooling tower 2 with a mainly cylindrical cross-section in the vertical direction, provided with an outer surface i.e. wall 3, an upper part 4 and a bottom part 5 of the cooling tower, which together define the cooling space 6. Most advantageously the shape of the cooling tower 2 is a cylinder in the vertical direction, but it may also have a shape where the cross-section becomes wider in the upper part 4, in which case a wider acceleration area is achieved for the air flow before it is exhausted from the cooling tower. The upper part and the bottom part are closed while the cooling is in operation. The outer surface 3 of the cooling tower is typically made of fiberglass or a corresponding material. The cooling air 7 is fed in the cooling space 6 of the cooling tower 2 horizontally with respect to the cooling tower, and in parallel with a tangent 15 of the outer surface of the cooling tower, by means of cooling air feed equipment 8, comprising at least one inlet aperture 9 arranged on the outer surface 3 of the cooling tower, and means such as a fan for feeding the cooling air further to the cooling space 6 of the cooling tower. There may also be several inlet apertures arranged at different spots of the outer surface 3. The liquid 10 to be cooled is fed by means of liquid feed equipment 11, comprising means such as for example liquid nozzles 24 for injecting the liquid 10 to be cooled to the cooling space 6. The liquid drops to be cooled, such as electrolyte drops, move in the cooling tower against the vertically upwardly proceeding air flow 20, in which case water is evaporated therefrom. In the cooling space of the cooling tower, the air flow becomes turbulent, and its velocity in the horizontal direction increases. Smaller droplets are separated from the downwardly flowing cooled drops, which droplets are conducted to the exhaust air discharge equipment 12, which is in communication with the cooling space 6. In the exhaust air discharge equipment 12, liquid droplets are separated from the air and can be recirculated to be recooled in the cooling tower 2. The cooled liquid is removed for instance through a hole 13 provided in the bottom part 5 of the cooling tower, or through an overflow aperture 25, and sent to further processing.

The exhaust air discharge equipment 12 according to the invention comprises an at least partly hollow housing element 19, provided according to the example with eight outlet apertures 16 arranged vertically with respect to the horizontal cross-section of the cooling tower 2. When the outlet apertures are arranged in the vertical direction in relation to the exhaust air flow 14, the exhaust air flow 14 is allowed to be discharged horizontally and in parallel with a tangent 15 of the outer surface 3 of the cooling tower. The outlet apertures 16 are positioned equidistantly in the housing element 19, in which case each plane 17 parallel to the surface of the outlet aperture forms an equally large angle B with a tangent 15 of the outer surface of the cooling tower 2. The ratio of the vertical height 22 of the outlet aperture 16 and the vertical height 23 of the cooling tower is preferably 1:5. Naturally the number, height, position and angle B of the outlet apertures 16 can vary depending on the quantity of the liquid to be cooled and the cooling air fed in, as well as on the cooling demand. Each outlet aperture 16 is provided with a droplet separator element 18 arranged vertically in parallel with the outlet aperture surface, which separator element 18 separates liquid droplets from the exhaust air 14, and the droplets can be recirculated back to the cooling tower. According to an example, the droplet separator element 18 is formed of at least two adjacently arranged, air-permeable vertical plates with a corrugated profile. A maintenance level 21 can be installed to surround the cooling tower 2, in the vicinity of the upper part 4 thereof, from which maintenance level 21 the maintenance of the cooling equipment is easily carried out.

For a man skilled in the art, it is obvious that the various different embodiments of the invention are not restricted to the examples described above, but may vary within the scope of the appended claims.

## Claims

1. Cooling equipment (1) for cooling liquid, comprising:
- a cooling tower (2) that is mainly cylindrical in the vertical direction, having an outer surface (3), an upper part (4) and a bottom part (5) of the cooling tower, defining the cooling space (6),
- cooling air feed equipment (8), comprising at least one inlet aperture (9) arranged on the outer surface (3) of the cooling tower, means for feeding cooling air to the inlet aperture and further to the cooling space of the cooling tower,
- liquid feed equipment (11), comprising means for feeding the liquid (10) to be cooled to the cooling space (6),
- exhaust air discharge equipment (12),
- as well as means (13) for removing the cooled liquid,wherein the cooling air feed equipment (8) and the exhaust air discharge equipment (12) are arranged, with respect to the cooling tower (2), so that both the flowing direction of the cooling air (7) from the inlet aperture (9) to the cooling space (6) and the flowing direction of the exhaust air (14) from the discharge equipment (12) is horizontal and tangential with respect to the cooling tower (2), respectively, **characterized in that** the exhaust air discharge equipment (12) includes a housing element (19) provided with at least four outlet apertures (16) arranged vertically with respect to the horizontal cross-section of the cooling tower (2), the outlet apertures (16) being distributed along the circumference of the cooling tower (2).

2. Cooling equipment according to claim 1, **characterized in that** the housing element (19) of the exhaust air discharge equipment (12) is provided with eight outlet apertures (16), arranged equidistantly in the housing element, so that each plane (17) parallel to the surface of the outlet aperture forms an equally large angle (B) with a tangent (15) of the outer surface of the cooling tower (2).

3. Cooling equipment according to claim 2, **characterized in that** in each outlet aperture (16), there is installed in the vertical direction at least one droplet separator element (18) for separating liquid droplets from the exhaust air.

4. Cooling equipment according to claim 3, **characterized in that** the droplet separator element (18) is formed of at least two adjacently installed, air-permeable vertical plates with a corrugated profile.

5. Cooling equipment according to any of the preceding claims, **characterized in that** the exhaust air discharge equipment (12) is arranged in the upper part (4) of the cooling tower (2), and the cooling air feed equipment (8) is arranged in the vicinity of the bottom part (5).

6. Cooling equipment according to claim 1, 2 or 3, **characterized in that** the ratio of the height (22) of the outlet aperture (16) and the height (23) of the cooling tower in the vertical direction is advantageously 1:5.

7. Cooling equipment according to claim 1, **characterized in that** the liquid feed equipment (11) comprises at least one liquid nozzle (24), installed in the upper part (4) of the cooling tower, underneath the exhaust air discharge equipment (12).

## Patentansprüche

1. Kühleinrichtung (1) zum Kühlen von Flüssigkeit, aufweisend:
- einen in der Vertikalrichtung im wesentlichen zylindrischen Kühlturm (2) mit einer Außenfläche (3), einem oberen Teil (4) und einem Bodenteil (5) des Kühlturms, durch die der Kühlraum (6) definiert ist,
- eine Einrichtung (8) zum Zuführen von Kühlluft, aufweisend mindestens eine Einlassöffnung (9), die auf der Außenfläche (3) des Kühlturms angeordnet ist, Mittel zum Zuführen von Kühlluft an die Einlassöffnung und ferner an den Kühlraum des Kühlturms,
- eine Einrichtung (11) zum Zuführen von Flüssigkeit, die Mittel zum Zuführen der zu kühlenden Flüssigkeit (10) an den Kühlraum (6) aufweist,
- eine Abluft-Abgabeeinrichtung (12),
- wie auch Mittel (13) zum Abführen der Kühlflüssigkeit, wobei die Zufuhreinrichtung (8) für Kühlluft und die Abluftabgabe-Einrichtung (12) mit Bezug auf den Kühlturm (2) angeordnet sind, dass sowohl jeweils die Strömungsrichtung der Kühlluft (7) von der Einlassöffnung (9) an den Kühlraum (6) und die Strömungsrichtung der Abluft (14) von der Abgabeeinrichtung (12) horizontal und bezüglich des Kühlturmes (2) tangential ist, **dadurch gekennzeichnet, dass** die Abluft-Abgabeeinrichtung (12) ein Gehäuseelement (19) hat, das mit mindestens vier Auslassöffnungen (16) versehen ist, die bezüglich des horizontalen Querschnitts des Kühlturmes (2) vertikal angeordnet sind, wobei die Auslassöffnungen (16) über den Außenumfang des Kühlturmes (2) verteilt sind.

2. Kühleinrichtung nach Anspruch 1, **dadurch gekennzeichnet, dass** das Gehäuseelement (19) der Abluft-Abgabeeinrichtung (12) mit acht Auslassöffnungen (16) versehen ist, die äquidistant in dem Gehäuseelement angeordnet sind, sodass eine jeweilige Ebene (17) parallel zur Fläche der Auslassöffnung einen gleichgroßen Winkel (B) mit einer Tangente (15) der Außenfläche des Kühlturmes (2) bildet.

3. Kühleinrichtung nach Anspruch 2, **dadurch gekennzeichnet, dass** in jeder Auslassöffnung (16) in der Vertikalrichtung mindestens ein Tropfen-Separatorenelement (18) zum Separieren von Flüssigkeitstropfen aus der Abluft installiert ist.

4. Kühleinrichtung nach Anspruch 3, **dadurch gekennzeichnet, dass** das Tropfen-Separatorenelement (18) aus mindestens zwei zueinander angrenzend installierten luftdurchlässigen vertikalen Platten mit einem geriffelten Profil gebildet ist.

5. Kühleinrichtung nach einem der vorangehenden Ansprüche, **dadurch gekennzeichnet, dass** die Abluft-Abgabeeinrichtung (12) in dem oberen Teil (4) des Kühlturms (2) angeordnet ist, und die Zufuhreinrichtung (8) für Kühlluft in der Nähe des Bodenteils (5) angeordnet ist.

6. Kühleinrichtung nach Anspruch 1, 2 oder 3, **dadurch gekennzeichnet, dass** das Verhältnis der Höhe (22) der Auslassöffnung (16) zur Höhe (23) des Kühlturms in der Vertikalrichtung vorteilhaft 1:5 ist.

7. Kühleinrichtung nach Anspruch 1, **dadurch gekennzeichnet, dass** die Zufuhreinrichtung (11) für die Flüssigkeit mindestens eine Flüssigkeitsdüse (24) aufweist, die in dem oberen Teil (4) des Kühlturmes unterhalb der Abluft-Abgabeeinrichtung (12) installiert ist.

## Revendications

1. Equipement de refroidissement (1) pour refroidir un liquide, comprenant :
- une tour de refroidissement (2) qui est principalement cylindrique dans la direction verticale, ayant une surface extérieure (3), une partie supérieure (4) et une partie inférieure (5) de la tour de refroidissement, définissant l'espace de refroidissement (6),
- un équipement d'alimentation en air de refroidissement (8), comprenant au moins un orifice d'admission (9) disposé sur la surface extérieure (3) de la tour de refroidissement, un moyen pour alimenter l'orifice d'admission puis l'espace de refroidissement de la tour de refroidissement en air de refroidissement,
- un équipement d'alimentation en liquide (11), comprenant un moyen pour alimenter l'espace de refroidissement (6) en liquide (10) devant être refroidi,
- un équipement d'évacuation d'air d'échappement (12),
- ainsi qu'un moyen (13) pour retirer le liquide refroidi,
dans lequel sont disposés l'équipement l'alimentation en air de refroidissement (8) et l'équipement d'évacuation d'air d'échappement (12), par rapport à la tour de refroidissement (2), de telle sorte qu'autant la direction d'écoulement de l'air de refroidissement (7), de l'orifice d'admission (9) vers l'espace de refroidissement (6), que la direction d'écoulement de l'air d'échappement (14) depuis l'équipement d'évacuation (12) est horizontale et tangentielle par rapport à la tour de refroidissement (2), respectivement, **caractérisé par le fait que** l'équipement d'évacuation d'air d'échappement (12) contient un élément de boîtier (19) pourvu d'au moins quatre orifices de sortie (16) disposés verticalement par rapport à la section transversale horizontale de la tour de refroidissement (2), les orifices de sortie (16) étant distribués le long de la circonférence de la tour de refroidissement (2).

2. Equipement de refroidissement selon la revendication 1, **caractérisé par le fait que** l'élément de boîtier (19) de l'équipement d'évacuation d'air d'échappement (12) est pourvu de huit orifices de sortie (16), disposés de manière équidistante dans l'élément de boîtier, de telle sorte que chaque plan (17) parallèle à la surface de l'orifiice de sortie forme un angle (B) identique avec une tangente (15) de la surface extérieure de la tour de refroidissement (2).

3. Equipement de refroidissement selon la revendication 2, **caractérisé par le fait qu'**au moins un élément séparateur de gouttelettes (18) est installé, dans chaque orifice de sortie (16), dans la direction verticale pour séparer des gouttelettes de liquide de l'air d'échappement.

4. Equipement de refroidissement selon la revendication 3, **caractérisé par le fait que** l'élément séparateur de gouttelettes (18) est formé d'au moins deux plaques verticales perméables à l'air installées adjacentes, avec un profilé ondulé.

5. Equipement de refroidissement selon l'une quelconque des revendications précédentes, **caractérisé par le fait que** l'équipement d'évacuation d'air d'échappement (12) est disposé dans la partie supérieure (4) de la tour de refroidissement (2), et l'équipement d'alimentation en air de refroidissement (8) est disposé à proximité de la partie inférieure (5).

6. Equipement de refroidissement selon la revendication 1, 2 ou 3, **caractérisé par le fait que** le rapport entre la hauteur (22) de l'orifice de sortie (16) et la hauteur (23) de la tour de refroidissement dans la direction verticale est avantageusement de 1:5.

7. Equipement de refroidissement selon la revendication 1, **caractérisé par le fait que** l'équipement d'alimentation en liquide (11) comprend au moins une buse de liquide (24), installée dans la partie supérieure (4) de la tour de refroidissement, sous l'équipement d'évacuation d'air d'échappement (12).
